# EUROPÄISCHE PATENTSCHRIFT

(11) **EP 2 805 113 B1**
(45) Veröffentlichungstag und Bekanntmachung des Hinweises auf die Patenterteilung: **17.10.2018**
(21) Anmeldenummer: 12810165.6
(22) Anmeldetag: 12.12.2012
(51) Int. Cl.: B23P 19/04

(54) **VERFAHREN ZUM NACHRÜSTEN EINES GASTURBINENKRAFTWERKS**
METHOD FOR RETROFITTING A GAS TURBINE POWER STATION
PROCÉDÉ DE MISE À NIVEAU D'UNE CENTRALE À TURBINE À GAZ

(30) Priorität: 22.02.2012 DE 102012202729; 16.05.2012 DE 102012208221
(43) Veröffentlichungstag der Anmeldung: 26.11.2014
(73) Patentinhaber: Siemens Aktiengesellschaft, 80333 München (DE)
(72) Erfinder: BRUNHUBER, Christian, 91275 Auerbach (DE); KREMER, Hermann, 65835 Liederbach (DE); STROBELT, Frank, 90419 Nürnberg (DE); VORTMEYER, Nicolas, 91054 Erlangen (DE); ZIMMERMANN, Gerhard, 91315 Höchstadt/Aisch (DE)
(86) Internationale Anmeldenummer: PCT/EP2012/075199
(87) Internationale Veröffentlichungsnummer: WO 2013/124015

(56) Entgegenhaltungen:
- EP-A1- 1 138 369
- EP-A1- 2 145 667
- WO-A1-2008/090166
- WO-A2-2011/051493
- WO-A2-2011/051494
- CA-A1- 2 779 363
- DE-A1-102007 043 331
- US-A- 4 434 613

## Beschreibung

Die vorliegende Erfindung betrifft ein Verfahren zum Nachrüsten eines bereits bestehenden Gasturbinenkraftwerks, welches mit einer CO₂-Abtrennvorrichtung ausgestattet werden soll.

Die Abtrennung von CO₂-Gas aus einem Abgasstrom einer Verbrennungsanlage erlaubt einen verminderten Ausstoß von CO₂ in die Atmosphäre. Dies ist insbesondere vor dem Hintergrund einer staatlich und zwischenstaatlich reglementierten Verminderungen von ausgestoßenem CO2 ein wirtschaftlicher Kostenfaktor, der zunehmen in den geschäftlichen Zukunftsplanungen vieler Unternehmen Berücksichtigung erfahren wird.

Zur selben Zeit ermöglicht ein solches CO₂-Abtrennverfahren auch die gezielte Ansammlung von CO₂-Gas, welches wiederum speziellen prozesstechnischen Verfahren als Ausgangsstoff zugeführt werden kann. Demzufolge kann CO₂ auch als wertvoller Grundstoff betrachtet werden. Ein solches Verfahren zur technischen Verwendung von CO₂ stellt beispielsweise das "Enhanced Oil Recovery" (EOR) Verfahren dar, bei welchem CO₂ in unterirdische Gesteinsschichten von Öllagerstätten einpresst wird, damit es sich in dem in diesen Öllagerstätten vorkommenden Rohöl löst und gleichzeitig eine Viskositätserniedrigung des Rohöls herbeiführt. Aufgrund der Viskositätserniedrigung wird die Fließfähigkeit des Öls deutlich erhöht und kann damit leichter unter geringerem Fliesswiderstand aus den Gesteinsstrukturen entnommen werden. Gleichzeitig dient das in die unterirdischen Öllagerstätten verpresste CO₂ dazu, den Umgebungsdruck in den Öllagerstätten zu erhöhen, wodurch ein direktionales Fließverhalten des hinsichtlich seiner Viskosität veränderten Rohöls erreicht werden kann.

Das in die Öllagerstätten eingebrachte CO₂ Gas entstammt derzeitig noch mehrheitlich aus Raffinerieprozessen der Erdgas aufbereitenden Industrie. Über die letzten Jahre hat sich jedoch erwiesen, dass der aufwendige Transport an derart erzeugtem CO₂ von den Raffineriestätten hin zu den Öllagerstätten ein mitunter großes und teures Leitungsnetzwerk erfordert. Die Bereitstellung eines solchen Netzwerkes lässt jedoch wiederum die Kosten für das CO₂ und damit die Kosten für das mit Hilfe des CO₂'s geförderten Rohöls stark ansteigen.

Insofern ist man bereits teilweise dazu übergegangen, die Erdgasaufbereitung in örtlicher Nähe zu den Öllagerstätten anzusiedeln. Da die Erdölförderung typischerweise auch Erdgas als Nebenprodukt liefert, kann das dort gewonnene Erdgas verhältnismäßig kostengünstig aufbereitet und folglich CO2 verhältnismäßig kostengünstiger gewonnen werden.

Weitere Bemühungen richten sich darauf, in den Regionen der Erdölförderung CO₂ aus den für die Erdölförderung betriebenen Verbrennungsanlagen zur Energiegewinnung abzutrennen. Die Verbrennungsanlagen sind aufgrund des starken Vorkommens an Erdgas in den Regionen der Erdölförderung meist als Gasturbinen ausgeführt. Hierzu wird die Verbrennungsanlage für den Betrieb mit einer geeigneten CO₂-Abtrennvorrichtung ausgestattet, wobei das mittels der CO₂-Abtrennvorrichtung gewonnene CO₂ weiter aufbereitet werden kann. Ebenso kann das so gewonnene CO₂ unmittelbar in die Öllagerstätten zur verbesserten Ölgewinnung unter Druck eingepumpt werden. Die Ausstattung der Verbrennungsanlage mit einer CO2-Abtrennvorrichtung erfolgt hierbei typischerweise indem beide Komponenten in einer Gesamtanlage konzipiert und miteinander verschaltet werden, wobei beide Komponenten hinsichtlich ihres Betriebes auf die jeweils andere Komponente eingestellt werden.

Auch wenn die Verbrennungsanlage aufgrund der in ihr stattfindenden oxidativen Verbrennung CO₂ in verhältnismäßig großen Mengen erzeugen kann, ist seine Abtrennung in einer nachgeschalteten CO₂-Abtrennvorrichtung nur mittels eines energieintensiven CO₂-Abtrennverfahrens möglich. Dieser zusätzliche Verbrauch an Energie vermindert einerseits die Kostengünstigkeit des so gewonnenen CO₂ und zusätzlich auch die Gesamteffizienz des Systems aus Verbrennungsanlage und CO₂-Abtrennvorrichtung merkbar.

Der Stand der Technik offenbart bereits Gas-Kraftwerke mit angeschlossener CO₂ Abscheidevorrichtung. So offenbaren die WO 2011/051494 A2, WO 2011/051493 A2 und EP 1 138 369 A1 beispielsweise bereits Verfahren zum Nachrüsten eines bestehenden Gasturbinen-Kraftwerks.

Die DE 10 2008 002870 A1 offenbar insbesondere ein Energieerzeugungssystem mit einem Gasturbinensystem. Beschrieben ist ein nachrüstbares Abgasrückführsystem, welches eine Trenneinrichtung aufweist, die den Rauchgasstrom des Gasturbinensystems in zwei geteilte Ströme aufteilt. Ein Wärmerückgewinnungs-Dampfgenerator, der zur Aufnahme des ersten abgespaltenen Stromes und zum Erzeugen eines gekühlten ersten abgespaltenen Stromes eingerichtet ist, ist dieser Trenneinrichtung fluidtechnisch nachgeschaltet. In einer Ausführungsform wird ein Teil des gekühlten ersten Abgases aus dem Wärmerückgewinnungs-Dampfgenerator der Atmosphäre zugeführt. In einer anderen Ausführungsform wird der Abgasstrom zu einer CO₂-Trenneinheit geschickt, um CO₂ abzutrennen. Nachteilig dabei ist, dass die CO₂-Trenneinheit mit Energie aus dem Gaskraftwerk versorgt wird, dessen elektrische Leistung dadurch geschmälert wird.

Darüber hinaus offenbaren die Dokumente US 4,434,613 A, CA 2 779 363 A1 und EP 2 145 667 A1 weitere Variationen, wie eine CO₂ Abscheidevorrichtung vorzugsweise mit einer Kraftwerksanlage verschaltet werden kann. Keiner dieser Lösungen gelingt es jedoch, von der Kraftwerksanlage Leistungsautark zu sein.

Folglich ist es wünschenswert, ein geeignetes Verfahren zum Nachrüsten eines bereits bestehenden Gasturbinenkraftwerks mit einer CO₂-Abtrennvorrichtung vorzuschlagen, wobei das Nachrüstverfahren nicht die Leistungsabgabe, insbesondere die elektrische Leistungsabgabe der Gasturbine einschränken soll. Weiter ist es wünschenswert, ein bereits bestehendes Gasturbinenkraftwerk derart nachzurüsten, dass eine effiziente Abtrennung von CO₂ aus dem Rauchgas des Gasturbinenkraftwerks ermöglicht wird. Besonders bevorzugt soll eine Nachrüstung eines Gasturbinenkraftwerks ermöglicht werden, welche einen im Wesentlichen energieautarken Betrieb einer damit fluidtechnisch verschalteten CO₂-Abtrennvorrichtung erlaubt.
Diese der Erfindung zugrundeliegenden Aufgaben werden durch ein Verfahren zum Nachrüsten eines bereits bestehenden Gasturbinenkraftwerks gemäß Patentanspruch 1 gelöst.

Insbesondere wird die Erfindung durch ein Verfahren zum Nachrüsten eines bereits bestehenden Gasturbinenkraftwerks gelöst, wobei das Verfahren wenigstens folgende Schritte aufweist:
- fluidtechnisches Verbinden einer Gasturbine (5) mit einer Rauchgasleitung (2) geeignet zur Leitung von durch die Gasturbine (5) erzeugtem Rauchgas;
- Koppeln der Rauchgasleitung (2) mit einer Dampferzeugungseinheit (10), die mit einem Wasser-Dampf-Kreislauf (11) fluidtechnisch verschaltet ist, und über welchen Wasser-Dampf-Kreislauf (11) eine Stromerzeugungseinrichtung (12) betrieben werden kann;
- fluidtechnisches Verbinden einer CO2-Abtrennvorrichtung (20) mit der Rauchgasleitung (2) zur Abtrennung des CO2 aus dem Rauchgas in der Rauchgasleitung (2), sowie
- elektrisches Verbinden der Stromerzeugungseinrichtung (12) mit der CO2-Abtrennvorrichtung (20), bevorzugt zum im Wesentlichen energieautarken Betrieb der CO2-Abtrennvorrichtung (20), wobei
- ein Wärmetauscher (50) mit der Rauchgasleitung (2) verschaltet wird, welcher dazu ausgebildet ist, Wärme aus dem Rauchgas in der Rauchgasleitung (2) auf den aus der CO2-Abtrennvorrichtung (20) austretenden Gasstrom zu übertragen.

Hier wie auch nachfolgend soll ein elektrisches Verbinden in seiner breitest möglichen Bedeutungsform verstanden werden. Insbesondere soll ein elektrisches Verbinden eine direkte, wie auch indirekte elektrische Verbindung umfassen.

Ebenso ist es ausführungsgemäß möglich, dass die Stromerzeugungseinrichtung mit weiteren elektrische Energie verbrauchenden Komponenten verbunden wird, damit diese in einer wirtschaftlichen Weise betrieben werden können. Solche Komponenten sind teilweise weiter unten beschrieben.

Hier wie im Weiteren soll auch der Begriff des Gasturbinenkraftwerks in einer breiten Form verstanden werden. Insbesondere umfassen erfindungsgemäße Gasturbinenkraftwerke auch gasturbinenbasierte Verbrennungsanlagen, die in der ölfördernden Industrie wie auch der chemischen Industrie zum Einsatz kommen. Die erfindungsgemäßen Gasturbinenkraftwerke sind jedoch nicht in einer Combined-Cycle-Anordnung vorgesehen, sondern als Single-Cycle bzw. Simple-Cycle Kraftwerk ausgelegt.

Weiter sind die erfindungsgemäßen Gasturbinenkraftwerke herkömmliche und noch nicht an spätere Erweiterungen angepasst, in der Art etwa dass sie mit einer CO₂-Abtrennvorrichtung ohne weitere technische Veränderungen ausgestattet werden könnten. D.h. die erfindungsgemäßen Gasturbinenkraftwerke sind insbesondere keine capture-ready Kraftwerke.

Erfindungsgemäß erlaubt das Verfahren zum Nachrüsten eines bereits bestehenden Gasturbinenkraftwerks eine geeignete Verschaltung verschiedener funktioneller Komponenten des Kraftwerks derart, dass ein energieeffizienter Betrieb unter gleichzeitiger Abtrennung von CO₂ aus dem Rauchgas der Gasturbine erreicht werden kann. Hierzu wird die Gasturbine zunächst derart mit einer Rauchgasleitung versehen, dass das durch die Gasturbinen während der Verbrennung erzeugte Rauchgas geeignet abgeleitet werden kann. Durch die Kopplung der Rauchgasleitung mit einer Dampferzeugungseinheit, kann die Wärme, welche in dem Rauchgas enthalten ist, in geeigneter Weise auf einen Wasser-Dampf-Kreislauf überführt werden. Dieser Wasser-Dampf-Kreislauf ist zudem dazu ausgebildet, eine Stromerzeugungseinrichtung zu betreiben.

Nach erfolgtem Wärmeübertrag mittels der Dampferzeugungseinheit soll das Rauchgas einer CO₂-Abtrennvorrichtung zugeführt werden, weshalb ein fluidtechnisches Verbinden der Rauchgasleitung mit einer solchen CO₂-Abtrennvorrichtung vorgenommen werden muss. Durch die elektrische Verschaltung der Stromerzeugungseinrichtung mit der CO₂-Abtrennvorrichtung können die elektrische Energie verbrauchenden Komponenten der CO₂-Abtrennvorrichtung besonders energieeffizient mit elektrischer Energie versorgt werden. Die elektrische Energie, welche durch Entnahme der Wärme mittels der Dampferzeugungseinheit aus dem Rauchgas stammt, erlaubt folglich den Betrieb der CO₂-Abtrennvorrichtung ohne auf die elektrische Energie zurückgreifen zu müssen, welche durch den Betrieb der Gasturbine in dem Kraftwerk erzeugt wurde.

Vor allem sieht das Verfahren zum Nachrüsten eines bereits bestehenden Gasturbinenkraftwerks die Bereitstellung einer weiteren Stromerzeugungsquelle, nämlich der Stromerzeugungseinrichtung vor, die insbesondere lediglich zur Bereitstellung von elektrischer Energie für die Komponenten der CO₂-Abtrennvorrichtung vorgesehen ist. Darüber hinaus ist es natürlich auch möglich, die so erzeugte elektrische Energie auch noch weiteren elektrische Energie verbrauchenden Komponenten zur Verfügung zu stellen, die entweder mit der Rauchgasleitung bzw. den damit verschalteten Komponenten in geeigneter Wechselwirkung stehen.

Das Nachrüsten eines bereits bestehenden Gasturbinenkraftwerks erlaubt eine Erweiterung des Kraftwerks hinsichtlich seiner Funktionalität. So wird bei Betrieb des Gasturbinenkraftwerks nicht nur elektrische Energie erzeugt, sondern auch CO₂ gezielt angesammelt, welches etwa für die Ölgewinnung bereitstehen kann. Hierzu ist das CO₂ aus der CO₂-Abtrennvorrichtung ab- und den Öllagerstätten in geeigneter Form zuzuführen. Da in den Regionen der Ölförderung zur Bereitstellung von elektrischer Energie typischerweise auch Gasturbinenkraftwerke betrieben werden, kann CO₂ direkt vor Ort, d.h. in der Nähe zu den Öllagerstätten erzeugt werden. Folglich entfällt ein energieineffizienter und kostenaufwendiger Transport von CO₂ über längere Strecken.

Zudem werden die Gasturbinenkraftwerke bei der Nachrüstung hinsichtlich ihrer elektrischen Leistungsfähigkeit nicht eingeschränkt, so dass diese weiterhin ohne Einschränkungen die elektrischen Energiemengen liefern können, für welche sie ursprünglich ausgelegt wurden. Die für die CO₂-Abtrennung notwendige elektrische Energie kann vollständig oder aber wenigstens mehrheitlich durch die Stromerzeugungseinrichtung bereitgestellt werden.

Durch den erfindungsgemäßen Wärmetauscher kann einerseits dem der CO₂-Abtrennvorrichtung zugeführten Rauchgas Wärme entzogen werden, wodurch es auf eine für den Betrieb der CO₂-Abtrennvorrichtung geeignete Temperatur abgekühlt werden kann. Gleichzeitig kann dem aus der CO₂-Abtrennvorrichtung austretenden Gasstrom Wärme zugeführt werden, so dass dieser Gasstrom etwa aus einem Kamin durch konvektive Luftzirkulation austreten kann. Hierbei beträgt das Temperaturniveau des der CO₂-Abtrennvorrichtung zugeführten Rauchgases typischerweise zwischen 30°C und 100°C, bevorzugt zwischen 30°C und 50°C, wobei dieses Temperaturniveau im Wesentlichen bei Durchtritt durch die CO₂-Abtrennvorrichtung gleich bleibt. Nach thermischer Behandlung des aus der CO₂-Abtrennvorrichtung austretenden Gasstroms in einer vorab beschriebenen Kältemaschine, kann das Temperaturniveau bis auf etwa 10 bis 25° C abgesenkt werden. Aufgrund dieses relativ geringen Temperaturniveaus im Vergleich zu der Umgebungstemperatur, muss dem Gasstrom weitere Wärme zugeführt werden, damit er beispielsweise mittels eines Kamins Luftschichten der Umgebung konvektiv zugeführt werden kann, die über dem Bodenniveau liegen.

Gemäß einer ersten besonders bevorzugten Ausführungsform des erfindungsgemäßen Verfahrens zum Nachrüsten ist vorgesehen, dass der Schritt des elektrischen Verbindens der Stromerzeugungseinrichtung mit der CO₂-Abtrennvorrichtung ein Verbinden mit wenigstens einer Pumpe der CO₂-Abtrennvorrichtung umfasst, bzw. ist. Demgemäß erlaubt das Verfahren einen Betrieb der von der CO₂-Abtrennvorrichtung umfassten Pumpen mittels der durch die Stromerzeugungseinrichtung erzeugten elektrischen Energiemengen. Der Verbrauch von anderweitig erzeugter elektrischer Energie ist damit unnötig. Hierbei ist auch darauf hinzuweisen, dass in einer CO₂-Abtrennvorrichtung typischerweise Pumpen die am meisten elektrische Energie verbrauchenden Komponenten sein können. Durch die Versorgung dieser Pumpen allein mit elektrischer Energie aus der Stromerzeugungseinrichtung kann die Gesamteffizienz des die CO₂-Abtrennvorrichtung umfassenden Gasturbinenkraftwerks deutlich gesteigert werden.

Gemäß einer weiteren Ausführungsform des erfindungsgemäßen Verfahrens ist vorgesehen, dass die CO₂-Abtrennvorrichtung wenigstens einen Absorberabschnitt und wenigstens einen Desorberabschnitt umfasst, die beide fluidtechnisch miteinander gekoppelt sind, wobei insbesondere der Schritt des fluidtechnischen Verbindens einer CO₂-Abtrennvorrichtung mit der Rauchgasleitung ein fluidtechnisches Verbinden mit dem wenigstens einen Absorberabschnitt umfasst bzw. ist. Ausführungsgemäß umfasst die CO₂-Abtrennvorrichtung also einen Absorberabschnitt in welchem typischerweise durch ein Waschmittel das CO₂ aus dem Rauchgas der Gasturbine ausgewaschen wird. Zur Rückgewinnung des Waschmittels, bzw. zur Abtrennung des so entfernten CO₂'s vom Waschmittel wird das Waschmittel in dem Desorberabschnitt thermisch behandelt. Die thermische Behandlung erfordert typischerweise Temperaturen von wenigstens 100° C oder darüber und erlaubt nach Desorption des CO₂'s von dem Waschmittel eine gezielte Trennung beider Substanzen. Das gasförmige CO₂ kann in geeigneter Form abgeführt werden. Das Waschmittel steht wiederum zur weiteren CO₂-Absorbtion in dem Absorberabschnitt bereit und wird diesem erneut zugeführt.

Eine detaillierte Darstellung der einzelnen Vorgänge in einer solchen CO₂-Abtrennvorrichtung, die wenigstens einen Absorberabschnitt sowie wenigstens einen Desorberabschnitt umfasst, kann aus der DE 102012202703.3 entnommen werden. Dieses Dokument soll zudem ausdrücklich durch Verweis mit in die vorliegende Anmeldung einbezogen werden.

Gemäß einer weiteren Ausführungsform des erfindungsgemäßen Verfahrens wird weiter ein Schritt des thermischen Koppelns des Wasser-Dampf-Kreislaufs mit der CO₂-Abtrennvorrichtung mit umfasst, insbesondere ein Schritt des thermischen Koppelns des Wasser-Dampf-Kreislaufs mit einem Desorberabschnitt der CO₂-Abtrennvorrichtung. Die thermische Kopplung erlaubt thermische Energie aus dem Wasser-Dampf-Kreislauf zu entnehmen und der CO₂-Abtrennvorrichtung zu zuführen. Die CO₂-Abtrennvorrichtung kann durch die Bereitstellung der zusätzlichen thermischen Energie in besonders energieeffizienter Weise betrieben werden. Insbesondere wenn die CO₂-Abtrennvorrichtung wenigstens einen Absorberabschnitt sowie wenigstens einen Desorberabschnitt umfasst, eignet sich eine thermische Abführung von thermischer Energie aus dem Wasser-Dampf-Kreislauf zum Betrieb des Desorberabschnitts. Da der Desorberabschnitt bei Betrieb mit thermischer Wärme versorgt werden muss, kann folglich die aus dem Wasser-Dampf-Kreislauf entnommene thermische Energie in geeigneter Weise dem Desorberabschnitt zur Verfügung gestellt werden. Gleichzeitig kann die thermische Kopplung des Wasser-Dampf-Kreislaufs mit der CO₂-Abtrennvorrichtung eine geeignete Wärmesenke in dem Wasser-Dampf-Kreislauf darstellen, die einen Betrieb der mit dem Wasser-Dampf-Kreislauf verbundenen Dampferzeugungseinheit überhaupt erst ermöglicht.

Gemäß einer weiteren Ausführungsform des erfindungsgemäßen Verfahrens kann ein weiterer Schritt des fluidtechnischen Verbindens der CO₂-Abtrennvorrichtung mit einem CO₂-Versorgungsnetzwerk umfasst sein, welcher insbesondere als ein Schritt des fluidtechnischen Verbindens eines Desorberabschnitts der CO₂-Abtrennvorrichtung mit einem CO₂-Versorgungsnetzwerk ausgeführt ist. Das CO₂-Versorgungsnetzwerk dient hierbei der Versorgung der ölfördernden Industrie mit geeigneten Mengen an CO₂. Durch eine direkte Einspeisung des CO₂'s in das betreffende Versorgungsnetzwerk kann das CO₂ direkt und besonders kostengünstig der ölfördernden Industrie zur Verfügung gestellt werden.

Gemäß einer weiteren Ausführungsform des erfindungsgemäßen Verfahrens wird weiter ein Kühlkreislauf mit dem Wasser-Dampf-Kreislauf fluidtechnisch verschaltet, dessen elektrische Energie verbrauchenden Komponenten mit der Stromerzeugungseinrichtung elektrisch verbunden werden, bzw. dessen thermische Energie der CO2-Abtrennvorrichtung zur Verfügung gestellt wird. Dieser Kühlkreislauf kann beispielsweise als thermische Kopplung des Wasser-Dampf-Kreislaufs mit der CO₂-Abtrennvorrichtung, wie oben beschrieben, ausgeführt sein. Ebenso kann dieser Kühlkreislauf als ein externer Kühlkreislauf ausgeführt sein, der Kälteleistung zur Verfügung stellen kann. Insbesondere kann der Kühlkreislauf auch Kühltürme umfassen, die dafür geeignet sind, den Kühlkreislauf mit geeigneter Kälteleistung zu versorgen.

Gemäß einer weiteren bevorzugten Ausführungsform der Erfindung wird weiter eine Kältemaschine der CO2-Abtrennvorrichtung fluidtechnisch nachgeschaltet, welche Kältemaschine dazu ausgebildet ist, bei Betrieb Wasser aus dem aus der CO2-Abtrennvorrichtung austretenden Gasstrom auszukondensieren. Die Kältemaschine ermöglicht folglich bei Betrieb die Bereitstellung von flüssigem Wasser, welches aus der CO₂-Abtrennvorrichtung ausgetreten ist. Das in der Kältemaschine auskondensierte Wasser stammt hierbei zum größten Teil aus dem Verbrennungsprozess in der Gasturbine, in welcher Brennstoff, bevorzugt Erdgas, zu CO₂ und Wasser verbrannt wird. Aufgrund der verhältnismäßig großen Mengen an Erdgas, die bei Betrieb der Gasturbine im Kraftwerk verbraucht werden, kann Wasser in industriell brauchbaren Mengen erzeugt werden. Dieses steht nach Auskondensation in der Kältemaschine für weitere prozesstechnische bzw. kraftwerkstechnische Verfahren zur Verfügung. Ebenso ist es denkbar, dass das so auskondensierte Wasser der menschlichen Benutzung zugeführt werden kann.

Entsprechend einem weiteren Aspekt des erfindungsgemäßen Verfahrens zum Nachrüsten wird eine Kühlvorrichtung mit der Rauchgasleitung verschaltet, die insbesondere zwischen der Dampferzeugungseinheit und der CO₂-Abtrennvorrichtung vorgesehen ist, und die dazu ausgebildet ist, Wärme aus dem in der Rauchgasleitung befindlichen Rauchgas zu entnehmen und damit einen Kälteerzeugungsprozess energetisch zu versorgen. Die Kühlvorrichtung ist folglich geeignet, weitere Kühlleistung zur Verfügung zu stellen. Diese Kühlleistung kann durch mit dem Gasturbinenkraftwerk verschaltete Komponenten abgerufen werden, bzw. kann auch weiteren externen Komponenten zur Verfügung gestellt werden. Insbesondere ist die Kühlvorrichtung als Adsorptionskältemaschine, als Absorptionskältemaschine und/oder als Dampfstrahlkältemaschine ausgebildet. Je nach abgefragter Kühlleistung wird dem Rauchgas in der Rauchgasleitung mehr oder minder thermische Energie entzogen. Entsprechend einer weiteren bevorzugten Ausführungsform der Erfindung umfasst die Stromerzeugungseinrichtung eine mit einem Generator gekoppelte Gegendruckturbine. Da eine solche besonders energieeffizient zur elektrischen Stromerzeugung eingesetzt werden kann, wird eine solche besonders bevorzugt vorgesehen.

Entsprechend einer weiteren Ausführungsform der Erfindung wird die Gasturbine hinsichtlich ihrer elektrischen Leistungsabgabe bei der Nachrüstung nicht verändert. Dieser Umstand ist mitunter wesentlich, für eine vorteilhafte Effizienz bei Betrieb des Systems aus Gasturbine und CO₂-Abtrennvorrichtung.

Ebenso ist es möglich, dass gemäß einer weiteren Ausführungsform, die Betriebsparameter der Gasturbine nicht hinsichtlich der Nachrüstung, insbesondere hinsichtlich des Betriebs der Dampferzeugungseinheit und des Betriebs der CO2-Abtrennvorrichtung angepasst werden. Folglich erfordert der Betrieb der CO₂-Abtrennvorrichtung relativ wenige bzw. keine Anpassungen des Prozesses bei Betrieb der Gasturbine. Die CO₂-Gewinnung mittels der CO₂-Abtrennvorrichtung erfolgt damit im Wesentlichen unabhängig vom Betrieb der Gasturbine und zeitlich nachgeschaltet. Diese Ausführungsform ermöglicht folglich eine vereinfachte Kopplung zwischen Gasturbine und CO₂-Abtrennvorrichtung.

Nachfolgend soll die Erfindung anhand von weiteren Figuren erklärt werden. Hierbei zeigen die Figuren lediglich schematische Darstellungen, welche die konkrete Verwirklichung der Erfindung entsprechend einer Ausführungsform nicht einschränken soll.

Weiter sind die Figuren lediglich beispielhaft zu verstehen und schränken somit wiederum nicht die Allgemeinheit, in welcher die vorliegende Erfindung beansprucht wird, ein.

Hierbei zeigen:
- FIG 1: eine erste Ausführungsform des mittels dem erfinderischen Verfahren zum Nachrüsten eines bereits bestehenden Gasturbinenkraftwerks erzeugten Systems.
- FIG 2: ein Flussdiagramm zur Darstellung der Abfolge einzelner Schritte gemäß einer Ausführungsform des erfindungsgemäßen Verfahrens.

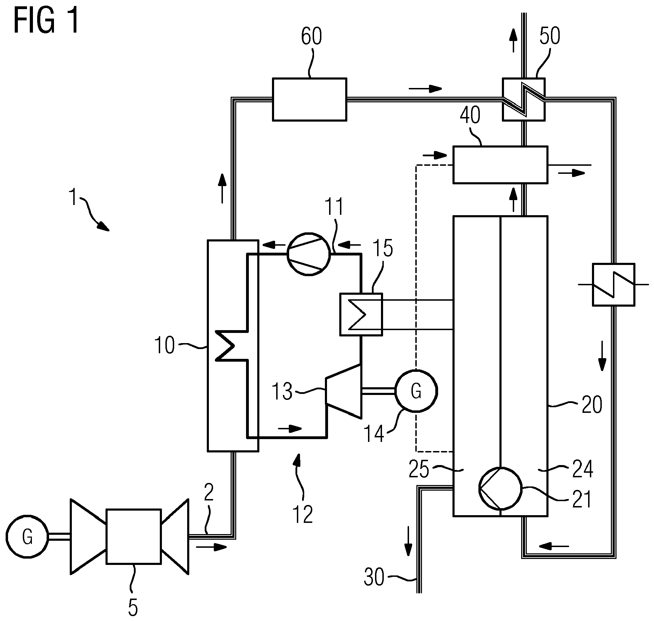

FIG 1 zeigt eine erste Ausführungsform einer mittels des erfindungsgemäßen Verfahrens zum Nachrüsten eines bereits bestehenden Gasturbinenkraftwerks 1 erzeugten Systems aus Gasturbine 5 und CO₂-Abtrennvorrichtung. Hierzu wurde an eine Gasturbine 5 eine Rauchgasleitung 2 angeschlossen, die zur Ableitung des aus der Gasturbine 5 austretenden Rauchgases geeignet ist. Das Rauchgas wird mittels der Rauchgasleitung 2 an eine Dampferzeugungseinheit 10 geleitet, welche durch thermischen Kontakt dem Rauchgas thermische Energie entnimmt und diese auf einen Wasser-Dampf-Kreislauf 11 überträgt. Der Fluidfluss im Wasser-Dampf-Kreislauf 11 wird von einer Pumpe (vorliegend nicht mit Bezugszeichen versehen) unterhalten, und nach Durchlaufen der Dampferzeugungseinheit 10 einer Gegendruckturbine 13 zugeführt. Durch Entspannung in der Gegendruckturbine 13 sowie durch Abgabe von thermischer Energie zur Bereitstellung von mechanischer Energie in der Gegendruckturbine 13 wird ein mit der Gegendruckturbine 13 verbundener Generator 14 angetrieben. Die bei Betrieb des Generators 14 erzeugte elektrische Energie wird über eine geeignete elektrische Verbindung einer CO₂-Abtrennvorrichtung 20 zugeleitet. Der Wasser-Dampf-Kreislauf 11 weist überdies einen Kühlkreislauf 15 auf, der dazu ausgebildet ist, Wärme aus dem Wasser-Dampf-Kreislauf 11 abzuführen und diese der CO₂-Abtrennvorrichtung 20 zuzuleiten. Die CO₂-Abtrennvorrichtung 20 kann diese Wärme zur Erwärmung geeigneter Abschnitte, insbesondere zur Erwärmung geeigneter Abschnitte in einem Desorberabschnitt 25, nutzen.

Gleichzeitig stellt der Kühlkreislauf 15 innerhalb des Wasser-Dampf-Kreislaufs 11 eine geeignete Wärmesenke dar.

Nach Abgabe von thermischer Energie durch das Rauchgas an die Dampferzeugungseinheit 10, tritt das Rauchgas in der Rauchgasleitung 2 mit einer Kühlvorrichtung 60 in thermischen Kontakt und stellt dieser Wärmeleistung zur Erzeugung von Kälteleistung zur Verfügung. Insbesondere ist die Kühlvorrichtung 60 als Adsorptions- bzw. Absorptionskältemaschine ausgeführt.

Strömungstechnisch nachfolgend wird weiterhin thermische Energie aus dem Rauchgas in der Rauchgasleitung 2 mittels eines Wärmetauschers 50 entnommen, wobei die so entnommene Wärme auf den aus der CO₂-Abtrennvorrichtung 20 austretenden Gasstrom übertragen wird. Insbesondere wird die Wärme auf einen aus einer Kältemaschine 40 austretenden Gasstrom übertragen, welche der Kältemaschine 40 der CO₂-Abtrennvorrichtung 20 fluidtechnisch nachgeschaltet ist.

Sollte das Rauchgas in der Rauchgasleitung durch die vorangehend beschriebenen thermischen Konditionierschritte noch nicht ausreichend für den Betrieb der CO₂-Abtrennvorrichtung 20 abgekühlt worden sein, ist es auch möglich, weitere Komponenten vorzusehen, die mit der Rauchgasleitung 2 verschaltet sind und dem darin strömenden Rauchgas Wärme entziehen können.

Das so thermische konditionierte Rauchgas wird der CO₂-Abtrennvorrichtung 20 zugeführt. Insbesondere wird das Rauchgas einem Absorberabschnitt 24 zugeführt, welcher mit einem Desorberabschnitt 25 fluidtechnisch verbunden ist. In dem Absorberabschnitt 24 wird das einströmende Rauchgas mit einem Waschmittel geeignet behandelt, so dass das CO₂ aus dem Rauchgas abgetrennt wird. Nach erfolgter Abtrennung wird die Verbindung aus Waschmittel und CO₂ dem Desorberabschnitt 25 mittels einer geeigneten Pumpe 21 zugeleitet, wobei der Desorberabschnitt 25 die Verbindung von Waschmittel und CO₂ thermisch derart behandelt, dass beide Stoffe getrennt werden. Dies erfolgt bei Temperaturen von etwa 100° C oder darüber. Nach erfolgter Trennung beider Stoffe kann das CO₂ über eine geeignete Ableitung aus der CO₂-Abtrennvorrichtung 20 in ein CO₂-Versorgungsnetzwerk 30 überführt werden. Das regenerierte Waschmittel wird aus dem Desorberabschnitt dem Absorberabschnitt 24 wiederum zugeführt, um dort erneut CO₂ zu binden, d.h. auszuwaschen.

Der aus der CO₂-Abtrennvorrichtung 20 austretende Gasstrom wird ausführungsgemäß einer Kältemaschine 40 zugeführt, welche dem Gasstrom erneut soviel thermische Energie entzieht, damit das in dem Gasstrom befindliche Wasser auskondensiert. Folglich wird der Taupunkt für Wasser des aus der CO₂-Abtrennvorrichtung 20 austretenden Gasstroms unterschritten.

Das auskondensierte Wasser kann über eine geeignete Ableitung entnommen werden. Die Ableitung kann das Wasser zur Zwischenspeicherung auch einem nicht weitere gezeigten Speicher zuführen, aus welchem eine gewünschte Menge an Wasser auch dann entnommen werden kann, wenn die Kältemaschine 40 nicht in der Lage ist, die nachgefragten Mengen kurzfristig zu liefern. So kann bspw. die durch die Kältemaschine 40 erzeugte Menge an flüssigem Wasser auch von der Umgebungstemperatur abhängen. Wird etwa vermehrt Wasser bei relativ hoher Umgebungstemperatur benötigt, so etwa während der Tageszeit bei voller Sonneneinstrahlung, ist es sinnvoll, Wasser zu einer Tageszeit anzusammeln, zu welcher die Umgebungstemperaturen geringer sind und folglich die Bereitstellung von flüssigem Wasser durch die Kältemaschine 40 effizienter erfolgen kann. Dies ist beispielsweise während den Nachtstunden der Fall. Das so angesammelte Wasser kann insbesondere wieder während eines Betriebs während des Tages bei hoher Sonneneinstrahlung in die CO₂-Abtrennvorrichtung 20 zurück geführt werden, um dort Flüssigkeitsverluste auszugleichen.

Zum Betrieb der Kältemaschine 40 kann dieser über eine geeignete Zuleitung elektrische Energie zugeführt werden. Diese kann insbesondere durch den Generator 14 bereit gestellt werden, welcher mit der Gegendruckturbine 13 zur Stromerzeugung zusammen wirkt.

Das aus der Kältemaschine 40 austretende Gas wird erneut in dem Wärmetauscher 50 thermisch konditioniert, so dass sein Temperaturniveau erhöht wird. Hierbei wird Wärme aus dem zur Zuführung an die CO₂-Abtrennvorrichtung 20 vorgesehenen Rauchgas auf den aus der Kältemaschine 40 austretenden Gasstrom übertragen. Ein Wärmeübertrag ist insofern erforderlich, als dass das aus der Kältemaschine 40 austretende Gas nicht ausreichend Wärme aufweist, um beispielsweise über einen Kamin ausgeschieden werden zu können.

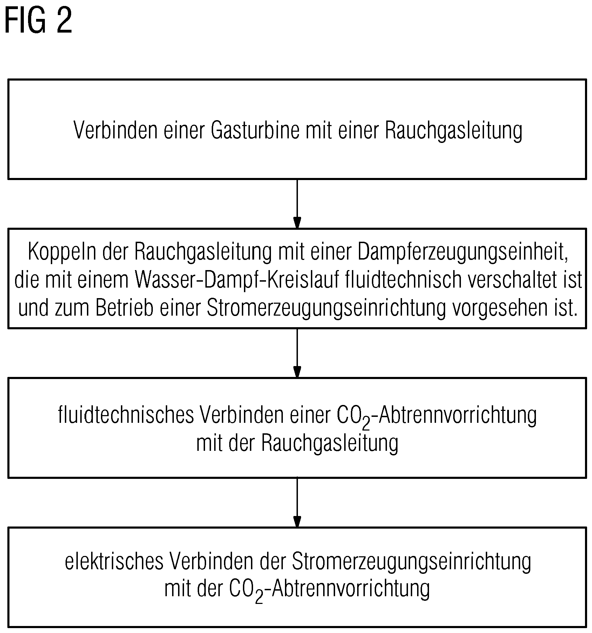

FIG 2 zeigt ein Flussdiagramm zur Erklärung einer ersten Ausführungsform des erfindungsgemäßen Verfahrens zum Nachrüsten eines bereits bestehenden Gasturbinenkraftwerks 1. Gemäß einem ersten Schritt wird eine Gasturbine 5 mit einer Rauchgasleitung 2 verbunden. Diese Verbindung ermöglicht die gezielte Ableitung und Führung des aus der Gasturbine 5 austretenden Rauchgases. Gemäß einem zweiten Schritt wird die Rauchgasleitung 2 mit einer Dampferzeugungseinheit 10 gekoppelt, welche mit einem Wasser-Dampf-Kreislauf 11 fluidtechnisch verschaltet ist und zum Betrieb einer Stromerzeugungseinrichtung 12 vorgesehen ist. Folglich kann dem Rauchgas in der Rauchgasleitung 2 thermische Wärme entzogen werden, welche auf das Wasser in dem Wasser-Dampf-Kreislauf 11 übertragen werden kann. Diese thermische Wärme wird in einem thermischen Wasser-Dampf-Prozess in elektrische Energie mit Hilfe der Stromerzeugungseinrichtung 12 umgewandelt. Gemäß einem dritten Schritt wird die Rauchgasleitung mit einer CO₂-Abtrennvorrichtung 20 fluidtechnisch verbunden, wobei die CO₂-Abtrennvorrichtung 20 bevorzugt geeignet ist, um CO₂ aus dem Rauchgas zu entfernen. Die Entfernung ermöglicht die gezielte Sammlung sowie auch die gezielte Ableitung des so gewonnenen CO₂'s. Gemäß einem weiter nachfolgenden Schritt des ausführungsgemäßen Verfahrens wird die Stromerzeugungseinrichtung 12 elektrisch mit der CO₂-Abtrennvorrichtung 20 verbunden. Folglich können die von der CO₂-Abtrennvorrichtung umfassten elektrischen Komponenten mittels des elektrischen Stromes aus der Stromerzeugungseinrichtung 12 versorgt und betrieben werden. Dies erhöht wiederum die Effizienz des gesamten Kraftwerksprozesses, da für den Betrieb der elektrischen Komponenten der CO₂-Abtrennvorrichtung 20 keine elektrische Energie von außen zugeführt werden muss. Vielmehr stammt die Energie für den Betrieb der CO₂-Abtrennvorrichtung 20 aus dem Rauchgas der Gasturbine 5, welches ohnehin ungenutzt der Umgebung zugeleitet würde. Dies betrifft insbesondere Gasturbinen 5 die im Sinne einer Single-Cycle-Anordnung betrieben werden.

Weitere Ausführungsformen ergeben sich aus den Unteransprüchen.

## Patentansprüche

1. Verfahren zum Nachrüsten eines bereits bestehenden Gasturbinen-Kraftwerks (1), wobei das Verfahren wenigstens folgende Schritte aufweist:
- fluidtechnisches Verbinden einer Gasturbine (5) mit einer Rauchgasleitung (2) geeignet zur Leitung von durch die Gasturbine (5) erzeugtem Rauchgas;
- Koppeln der Rauchgasleitung (2) mit einer Dampferzeugungseinheit (10), die mit einem Wasser-Dampf-Kreislauf (11) fluidtechnisch verschaltet ist, und über welchen Wasser-Dampf-Kreislauf (11) eine Stromerzeugungseinrichtung (12) betrieben wird;
- fluidtechnisches Verbinden einer CO2-Abtrennvorrichtung (20) mit der Rauchgasleitung (2) zur Abtrennung des CO2 aus dem Rauchgas in der Rauchgasleitung (2), sowie
- elektrisches Verbinden der Stromerzeugungseinrichtung (12) mit der CO2-Abtrennvorrichtung (20), bevorzugt zum im Wesentlichen energieautarken Betrieb der CO2-Abtrennvorrichtung (20), wobei
ein Wärmetauscher (50) mit der Rauchgasleitung (2) verschaltet wird, welcher dazu ausgebildet ist, Wärme aus dem Rauchgas in der Rauchgasleitung (2) auf den aus der CO2-Abtrennvorrichtung (20) austretenden Gasstrom zu übertragen.

2. Verfahren zum Nachrüsten gemäß Anspruch 1,
**dadurch gekennzeichnet, dass**
der Schritt des elektrischen Verbindens der Stromerzeugungseinrichtung (12) mit der CO2-Abtrennvorrichtung (20) ein Verbinden mit wenigstens einer Pumpe (21) der CO2-Abtrennvorrichtung (20) umfasst bzw. ist.

3. Verfahren zum Nachrüsten gemäß einem der vorhergehenden Ansprüche,
**dadurch gekennzeichnet, dass**
die CO2-Abtrennvorrichtung (20) wenigstens einen Absorberabschnitt (24) und wenigstens einen Desorberabschnitt (25) umfasst, die beide fluidtechnisch miteinander gekoppelt sind, wobei insbesondere der Schritt des fluidtechnischen Verbindens einer CO2-Abtrennvorrichtung (20) mit der Rauchgasleitung (2) ein fluidtechnisches Verbinden mit dem wenigstens einen Absorberabschnitt (24) umfasst bzw. ist.

4. Verfahren zum Nachrüsten gemäß einem der vorhergehenden Ansprüche,
**dadurch gekennzeichnet, dass**
weiter ein Schritt des thermischen Koppelns des Wasser-Dampf-Kreislaufs (11) mit der CO2-Abtrennvorrichtung (20) mit umfasst ist, insbesondere ein Schritt des thermischen Koppelns des Wasser-Dampf-Kreislaufs (11) mit einem Desorberabschnitt (25) der CO2-Abtrennvorrichtung (20).

5. Verfahren zum Nachrüsten gemäß einem der vorhergehenden Ansprüche,
**dadurch gekennzeichnet, dass**
weiter ein Schritt des fluidtechnischen Verbindens der CO2-Abtrennvorrichtung (20), insbesondere eines Desorberabschnitts (25) der CO2-Abtrennvorrichtung mit einem CO2-Versorgungsnetzwerk (30) umfasst ist.

6. Verfahren zum Nachrüsten gemäß einem der vorhergehenden Ansprüche,
**dadurch gekennzeichnet, dass**
weiter ein Kühlkreislauf (15) mit dem Wasser-Dampf-Kreislauf (11) fluidtechnisch verschaltet wird, dessen elektrische Energie verbrauchenden Komponenten mit der Stromerzeugungseinrichtung (12) elektrisch verbunden werden, bzw. dessen thermische Energie der CO2-Abtrennvorrichtung (20) zur Verfügung gestellt wird.

7. Verfahren zum Nachrüsten gemäß einem der vorhergehenden Ansprüche,
**dadurch gekennzeichnet, dass**
weiter eine Kältemaschine (40) der CO2-Abtrennvorrichtung (20) fluidtechnisch nachgeschaltet wird, welche dazu ausgebildet ist, bei Betrieb Wasser aus dem aus der CO2-Abtrennvorrichtung (20) austretenden Gasstrom auszukondensieren.

8. Verfahren zum Nachrüsten gemäß einem der vorhergehenden Ansprüche,
**dadurch gekennzeichnet, dass**
weiter eine Kühlvorrichtung (60) mit der Rauchgasleitung (2) verschaltet wird, insbesondere zwischen der Dampferzeugungseinheit (10) und der CO2-Abtrennvorrichtung (20), die dazu ausgebildet ist, Wärme aus dem in der Rauchgasleitung (2) befindlichen Rauchgas zu entnehmen und damit einen Kälteerzeugungsprozess energetisch zu versorgen.

9. Verfahren zum Nachrüsten gemäß einem der vorhergehenden Ansprüche,
**dadurch gekennzeichnet, dass**
die Stromerzeugungseinrichtung (12) eine mit einem Generator (14) gekoppelte Gegendruckturbine (13) umfasst.

10. Verfahren zum Nachrüsten gemäß einem der vorhergehenden Ansprüche,
**dadurch gekennzeichnet, dass**
die Gasturbine (5) hinsichtlich ihrer elektrischen Leistungsabgabe bei der Nachrüstung nicht verändert wird.

11. Verfahren zum Nachrüsten gemäß einem der vorhergehenden Ansprüche,
**dadurch gekennzeichnet, dass**
die Betriebsparameter der Gasturbine (5) nicht hinsichtlich der Nachrüstung, insbesondere hinsichtlich des Betriebs der Dampferzeugungseinheit (10) und des Betriebs der CO2-Abtrennvorrichtung (20) angepasst werden.

## Claims

1. Method for retrofitting an already existing gas turbine power plant (1), wherein the method features at least the following steps:
- fluidically connecting a gas turbine (5) to a flue gas duct (2) which is suitable for conducting flue gas which is produced by the gas turbine (5);
- connecting the flue gas duct (2) to a steam generating unit (10) which is fluidically connected to a water-steam cycle (11), and via which water-steam cycle (11) a power generating facility (12) is operated;
- fluidically connecting a CO₂ separation apparatus (20) to the flue gas duct (2) for separating the CO₂ from the flue gas in the flue gas duct (2), and
- electrically connecting the power generating facility (12) to the CO₂ separation apparatus (20), preferably for the essentially energy-autonomous operation of the CO₂ separation apparatus (20), wherein a heat exchanger (50) is connected to the flue gas duct (2) and is designed for transferring heat from the flue gas in the flue gas duct (2) to the gas flow issuing from the CO₂ separation apparatus (20).

2. Method for retrofitting according to Claim 1, **characterized in that** the step of electrically connecting the power generating facility (12) to the CO₂ separation apparatus (20) comprises, or is, a connection to at least one pump (21) of the CO₂ separation apparatus (20) .

3. Method for retrofitting according to one of the preceding claims,
**characterized in that** the CO₂ separation apparatus (20) includes at least one absorber section (24) and at least one desorber section (25), the two being fluidically interconnected, wherein the step of fluidically connecting a CO₂ separation apparatus (20) to the flue gas duct (2) especially comprises, or is, a fluidic connection to the at least one absorber section (24).

4. Method for retrofitting according to one of the preceding claims,
**characterized in that** in addition a step of thermally connecting the water-steam cycle (11) to the CO₂ separation apparatus (20) is included, especially a step of thermally connecting the water-steam cycle (11) to a desorber section (25) of the CO₂ separation apparatus (20).

5. Method for retrofitting according to one of the preceding claims,
**characterized in that** in addition a step of fluidically connecting the CO₂ separation apparatus (20), especially of fluidically connecting a desorber section (25) of the CO₂ separation apparatus, to a CO₂ supply network (30) is included.

6. Method for retrofitting according to one of the preceding claims,
**characterized in that** in addition a cooling circuit (15) is fluidically connected to the water-steam cycle (11), the electric energy-consuming components of which are electrically connected to the power generating facility (12), or its thermal energy is made available to the CO₂ separation apparatus (20).

7. Method for retrofitting according to one of the preceding claims,
**characterized in that** in addition a refrigerating machine (40) is fluidically connected downstream to the CO₂ separation apparatus (20) and is designed for condensing water out of the gas flow issuing from the CO₂ separation apparatus (20) during operation.

8. Method for retrofitting according to one of the preceding claims,
**characterized in that** in addition a cooling device (60) is connected to the flue gas duct (2), especially between the steam generating unit (10) and the CO₂ separation apparatus (20), and is designed for extracting heat from the flue gas which is present in the flue gas duct (2) and for energetically supplying a refrigeration process therewith.

9. Method for retrofitting according to one of the preceding claims,
**characterized in that** the power generating facility (12) comprises a back-pressure turbine (13) which is connected to a generator (14).

10. Method for retrofitting according to one of the preceding claims,
**characterized in that** the gas turbine (5) is not modified with regard to its electric power output when being retrofitted.

11. Method for retrofitting according to one of the preceding claims,
**characterized in that** the operating parameters of the gas turbine (5) are not adjusted with regard to the retrofit, especially with regard to the operation of the steam generating unit (10) and to the operation of the CO₂ separation apparatus (20).

## Revendications

1. Procédé de mise à niveau d'une centrale (1) à turbine à gaz déjà existante, le procédé ayant au moins le stade suivant :
- mise en communication en technique des fluides d'une turbine (5) à gaz avec un conduit (2) pour des gaz de fumée, propre à conduire des gaz de fumée produits par la turbine (5) à gaz;
- couplage du conduit (2) pour des gaz de fumée avec une unité (10) de production de vapeur, qui communique en technique des fluides avec un circuit (11) eau-vapeur et par lequel circuit (11) eau-vapeur on fait fonctionner un dispositif (12) de production de courant électrique;
- communication en technique des fluides d'un dispositif (20) de séparation de CO2 avec le conduit (2) pour des gaz de fumée pour séparer le CO2 des gaz de fumée dans le conduit (2) pour des gaz de fumée, ainsi que
- liaison électrique du dispositif (12) de production de courant électrique avec le dispositif (20) de séparation de CO2, de préférence pour le fonctionnement sensiblement autonome en énergie du dispositif (20) de séparation de CO2, dans lequel
on monte, avec le conduit (2) pour des gaz de fumée, un échangeur de chaleur (50) constitué pour transmettre de la chaleur, provenant des gaz de fumée dans le conduit (2) pour des gaz de fumée, au courant de gaz sortant du dispositif (20) de séparation de CO2.

2. Procédé de mise à niveau suivant la revendication 1,
**caractérisé en ce que**
le stade de la liaison électrique du dispositif (12) de production de courant électrique avec le dispositif (20) de séparation de CO2, comprend ou est une liaison avec au moins une pompe (21) du dispositif (20) de séparation de CO2.

3. Procédé de mise à niveau suivant l'une des revendications précédentes,
**caractérisé en ce que**
le dispositif (20) de séparation de CO2 comprend au moins une partie (24) formant absorbeur et au moins une partie (25) formant désorbeur communiquant toutes deux entre elles en technique des fluides, dans lequel notamment le stade de la communication en technique des fluides d'un dispositif (20) de séparation de CO2 avec le conduit (2) pour des gaz de fumée comprend ou est une communication en technique des fluides avec la au moins une partie (24) formant absorbeur.

4. Procédé de mise à niveau suivant l'une des revendications précédentes,
**caractérisé en ce qu'**
il comprend, en outre, un stade de couplage thermique du circuit (11) eau-vapeur avec le dispositif (20) de séparation de CO2, notamment un stade de couplage thermique du circuit (11) eau-vapeur avec une partie (25) formant désorbeur du dispositif (20) de séparation de CO2.

5. Procédé de mise à niveau suivant l'une des revendications précédentes,
**caractérisé en ce qu'**
il comprend, en outre, un stade de communication en technique des fluides du dispositif (20) de séparation de CO2, notamment d'une partie (25) formant désorbeur du dispositif de séparation de CO2 avec un réseau (30) d'alimentation en CO2.

6. Procédé de mise à niveau suivant l'une des revendications précédentes,
**caractérisé en ce qu'**
en outre, un circuit (15) de refroidissement communique en technique des fluides avec le circuit (11) eau-vapeur, dont les élément consommant de l'énergie électrique sont reliés électriquement au dispositif (12) de production de courant électrique ou dont l'énergie thermique est mise à disposition du dispositif (20) de séparation de CO2.

7. Procédé de mise à niveau suivant l'une des revendications précédentes,
**caractérisé en ce qu'**
en aval en technique des fluides du dispositif (20) de séparation de CO2, est monté une machine (40) frigorifique, constituée pour, en fonctionnement, condenser du courant gazeux sortant du dispositif (20) de séparation de CO2.

8. Procédé de mise à niveau suivant l'une des revendications précédentes,
**caractérisé en ce que**
l'on monte, en outre, avec le conduit (2) pour des gaz de fumée, notamment entre l'unité (10) de production de vapeur et le dispositif (20) de séparation de CO2, un dispositif (60) de refroidissement constitué pour prélever de la chaleur des gaz de fumée se trouvant dans le conduit (2) pour les gaz de fumée et alimenter ainsi énergétiquement un processus de production de froid.

9. Procédé de mise à niveau suivant l'une des revendications précédentes,
**caractérisé en ce que**
le dispositif (12) de production de courant électrique comprend une turbine (13) à contre pression couplée à une génératrice (14).

10. Procédé de mise à niveau suivant l'une des revendications précédentes,
**caractérisé en ce que**,
lors de la mise à niveau, on ne modifie pas la puissance électrique donnée par la turbine (5) à gaz.

11. Procédé de mise à niveau suivant l'une des revendications précédentes,
**caractérisé en ce que**
l'on n'adapte pas les paramètres de fonctionnement de la turbine (5) à gaz en ce qui concerne la mise à niveau, notamment en ce qui concerne le fonctionnement de l'unité (10) de production de vapeur et le fonctionnement du dispositif (20) de séparation de CO2.
